# EUROPEAN PATENT SPECIFICATION

(11) **EP 2 634 629 B1**
(45) Date of publication and mention of the grant of the patent: **09.04.2014**
(21) Application number: 12157442.0
(22) Date of filing: 29.02.2012
(51) Int. Cl.: G03B 21/14, H04N 5/74

(54) **Automatic projector behaviour changes based on projection distance**
Automatische Projektorverhaltensänderungen basierend auf dem Projektionsabstand
Comportement de projecteur automatique basé sur la distance de projection

(43) Date of publication of application: 04.09.2013
(73) Proprietor: BlackBerry Limited, Waterloo, ON N2K 0A7 (CA)
(72) Inventor: Walker, David Ryan, Waterloo, Ontario N2L 3W8 (CA); Pasquero, Jerome, Waterloo, Ontario N2L 3W8 (CA)
(74) Representative: Patel, Binesh

(56) References cited:
- WO-A1-2011/105502
- US-A1- 2008 212 039
- US-A1- 2011 304 833

## Description

### FIELD

The present matter relates to a system and methods for automatically varying a behaviour of a presentation by a projector based on distance.

### BACKGROUND

Digital projectors are becoming more popular with recent reductions in size and power consumption. As such, they are becoming increasingly more portable and the surfaces they are projected onto, along with the projection distances, are increasingly varied. A portable projector may be used to project a small image on a nearby table top or the palm of a user's hand, or to project a large image on a wall at a distance. US 2008/0212039 discloses a projector, the image projected by which depends on the distance of projection.

### SUMMARY

The present invention is concerned with a method of varying the behaviour of a projector as defined by claim 1. The operations for varying the behaviour from a first behaviour to a second behaviour responsive to a change in projection distance from a first distance to a second distance, the behaviours comprising a control mode or a presentation mode. Furthermore, the operations for varying the behaviour of the projector are responsive to criteria including projection distance, amount of change in projection distance and rate of change in projection distance associated with a range sensor.

According to an aspect, disclosed is a method of automatically varying a behaviour of a presentation by a projection device from a first behaviour to a second behaviour responsive to a change in projection distance from a first distance to a second distance, the behaviours comprising a control mode or a presentation mode. One of the first and second distances may be less than a threshold value, and the other of the first and second distances may be greater than a threshold value. The change in projection distance may be greater than a threshold value or a threshold percentage of the first projection distance. The change in projection distance is received as control input. The varying may comprise changing a representation of information for projection by the projection device, or changing the borders of the projection view of the projection device while maintaining scale, or changing the type or category of the content for projection by the projection device. The control mode behaviour may comprise presenting a control interface, receiving gesture or voice input. The change in distance may be instantaneous.

According to another aspect, there is disclosed a computer readable medium having computer readable code embodied therein for execution by a processor for configuring a computer to carry out one or more method aspects.

According to another aspect, there is disclosed a system comprising a projection device comprising a range sensor and a computing device comprising a processor and memory configured to vary a behaviour of a presentation by the projection device, wherein computing device is coupled to the projection device and the processor and memory are configured to carry out one or more method aspects.

### BRIEF DESCRIPTION OF THE DRAWINGS

In order that the subject matter may be readily understood, embodiments are illustrated by way of examples in the accompanying drawings, in which:
**Figure 1** is a block diagram illustrating components of a projection device according to one embodiment;
**Figure 2** is a block diagram illustrating a projector system according to one embodiment including a projection device and a content source device based on the device of Figure 1; and
**Figures 3** is a flowcharts showing operations for varying a behaviour of a presentation by the device of Figure 1.

For convenience, like numerals in the description refer to like structures in the drawings.

### DETAILED DESCRIPTION

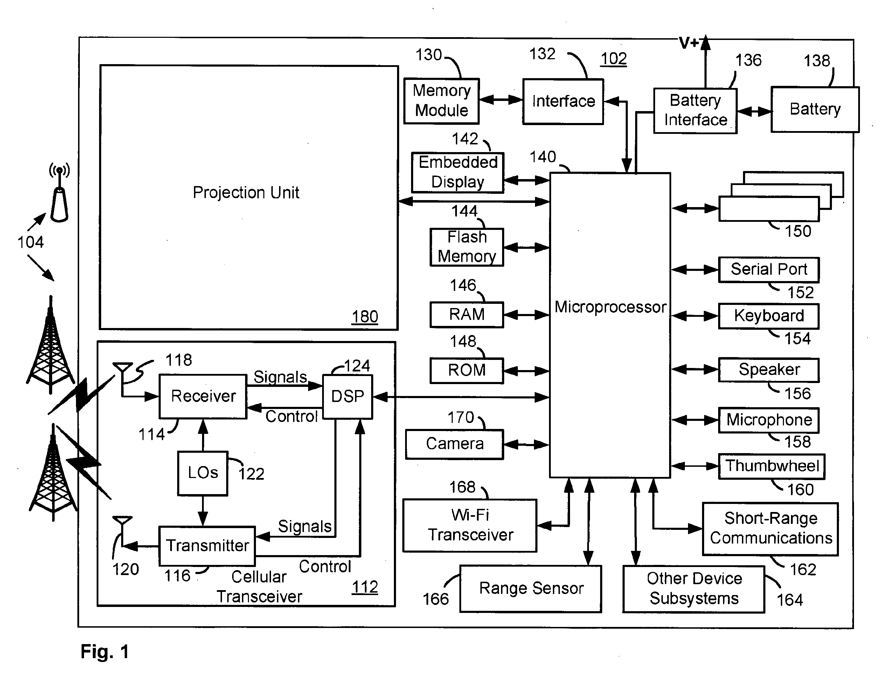

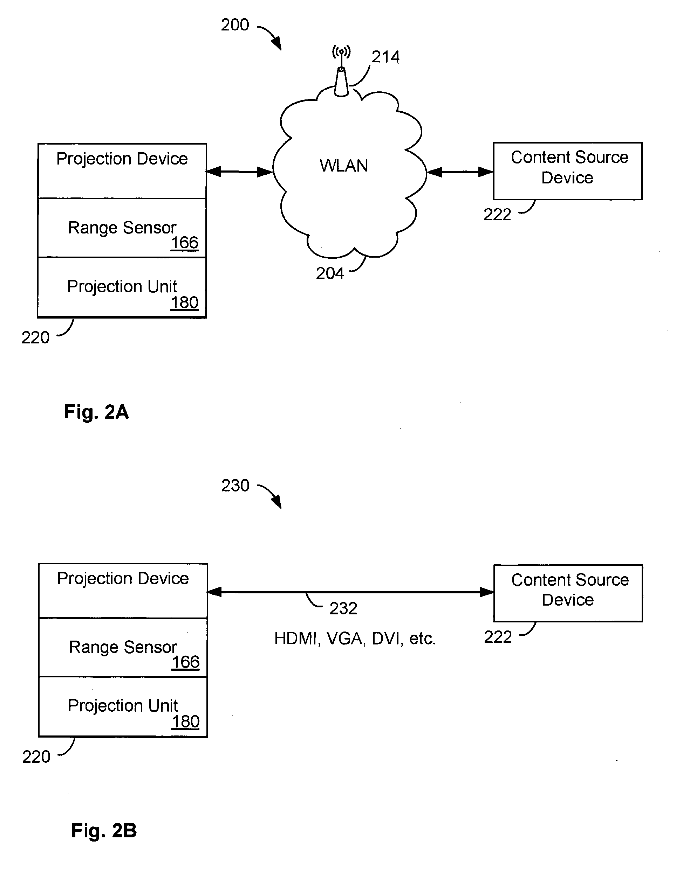

Reference is first made to FIG. 1, which shows a block diagram illustrating a projection device 102 that is suitable for operation in accordance with one aspect of the present disclosure. It will be further understood that projection device 102 is suitable to project media content in accordance with one aspect of the present disclosure. Network 104 is also illustrated with wireless capabilities and includes antenna, base stations, and supporting radio equipment for supporting wireless communications between projection device 102 and other devices connected to network 104. Network 104 may be coupled to a network gateway and to a wide area network, (e.g. as shown in FIG. 2A).

In one embodiment, projection device 102 is a projector having range sensing capabilities. In particular embodiments, projection device 102 is a handheld device. Depending on the functionality provided by projection device 102, it may be referred to as a handheld projector, a multimedia pocket projector, a pico projector, a portable projector, a digital projector, a cellular telephone with projector capabilities, a video camera with projector capabilities, a wireless Internet appliance, a smart phone, a portable gaming device, a portable media player, a personal digital assistant, a tablet or a laptop. More generically, it may be referenced as a computing device.

Projection device 102 may communicate with any one of a plurality of fixed transceiver stations within its geographic coverage area. Though a wireless device is shown, in some embodiments projection device 102 may have a wire connection to network 104.

Projection device 102 may incorporate one or more communication subsystems 112 and Wi-Fi transceivers 168. Communication subsystem 112 comprises a receiver 114, a transmitter 116, and associated components, such as one or more antenna elements (118 and 120), local oscillators (LOs) 122, and a processing module such as a digital signal processor (DSP) 124. In one embodiment, antenna elements (118 and 120) may be embedded or internal to projection device 102. As will be apparent to those skilled in the field of communications, the particular design of the communication subsystem 112 depends on the network 104 in which projection device 102 is intended to operate.

Projection device 102 may send and receive communication signals over the network 104 after network registration or activation procedures have been completed. Signals received (e.g. by antenna elements 118) through network 104 are input to receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in DSP 124. In a similar manner, signals to be transmitted are processed, including modulation and encoding, for example, by DSP 124. These DSP-processed signals are input to transmitter 116 for digital-to-analog (D/A) conversion, frequency up conversion, filtering, amplification, and transmission to the network 104 via antenna element 120. DSP 124 processes communication signals and provides for receiver and transmitter control. For example, the gains applied to communication signals in receiver 114 and transmitter 116 may be adaptively controlled through automatic gain control algorithms implemented in DSP 124.

Network access (WAN) may be associated with a subscriber or user of projection device 102 via a memory module, such as a memory module 130, which may be a Subscriber identity Module (SIM) card for use in a GSM network or a USIM card for use in a UMTS. The SIM card is inserted in or connected to an interface 132 of projection device 102 in order to operate in conjunction with network 104. Alternatively, projection device 102 may have an integrated identity module for use with systems such as Code Division Multiple Access (CDMA) systems. Projection device 102 may include a Wi-Fi transceiver 168 that may comprise similar components/chipsets to communication subsystem 112 adapted for one or more Wi-Fi protocols. Though Wi-Fi is shown, WiMAX is one alternative transceiver. In some embodiments, projection device 102 may be capable of Wi-Fi and WiMAX communications in accordance with software-defined radio ("cognizant radio") techniques.

Projection device 102 also includes a battery interface 136 for receiving one or more battery 138 which may be rechargeable. The one or more battery 138 provides electrical power to at least some of the electrical circuitry in projection device 102, and battery interface 136 provides a mechanical and electrical connection for the one or more battery 138. Battery interface 136 is coupled to a regulator (not shown) which provides power V+ to the circuitry of projection device 102.

Projection device 102 includes a programmable processor (e.g. microprocessor 140) which controls the overall operation of projection device 102. Communication functions, including at least data and voice communications, are performed through the communication subsystem 112. Microprocessor 140 also interacts with additional device subsystems such as a projection unit 180, a flash memory 144, a random access memory (e.g. RAM 146), a read-only memory (e.g. ROM 148), auxiliary input/output (I/O) subsystems 150 (e.g. an audio port for connecting to a set of headphones and/or a remote microphone (not shown)), a serial port 152 (e.g. Universal Serial Bus (USB)), a keyboard or keypad 154, an embedded display 142 (e.g. LCD display or touch screen display), a speaker 156, a microphone 158, a clickable thumbwheel, trackball, optical or other touch or gesture based input pad, or set of scroll buttons, etc. 160, typically for scrolling/selecting input, a short-range communications subsystem 162, and any other device subsystems generally designated as 164. Some of the subsystems shown in FIG. 1 perform communication-related functions, whereas other subsystems may provide "resident" or on-device functions.

Some subsystems, such as keypad 154, and input device 160, for example, may be used for communication-related functions, such as entering a text message for transmission over network 104, and executing device-resident functions such as a calculator or task list. Operating system software used by the microprocessor 140 is preferably stored in a persistent store such as flash memory 144, which may alternatively be ROM 148 or similar storage element. Those skilled in the art will appreciate that the operating system, specific device applications, or parts thereof, may be temporarily loaded into a volatile store such as RAM 146.

Projection unit 180 may be any type of projector suitable for use in projection device 102. A microprocessor is coupled to the projector unit. The microprocessor drives the projector unit according to video information.

Projector unit 180 may be based on projection technologies such as liquid crystal on silicon (LCoS), liquid crystal displays (LCDs), spatial light modulators, and digital light processing, etc. Depending on the projection technology used, projector unit 180 may include lens, mirrors, a digital micromirror device and a light source such as a metal-halide lamp, LEDs or lasers. Projector unit 180 is coordinated with a digital video or graphic signal to project and render an image onto a screen or other surface, such as a wall, table top or hand.

The microprocessor 140, in addition to its operating system functions, enables execution of software applications on projection device 102. A predetermined set of applications that control basic device operations, including one or more media related applications, will normally be installed on projection device 102 during or after manufacture.

One or more memory stores may be available on projection device 102 to facilitate storage of information, such as flash memory 144, RAM 146, ROM 148, memory module 130, or other types of memory storage devices or FLASH memory cards represented by other device subsystems 164, such as Secure Digital (SD) cards, mini SD cards, micro SD cards, etc.

Projection device 102 may have one or more software applications suitable for providing a data signal for output by projection unit 180. Types of application software may include: business applications for presenting presentations, documents, spreadsheets, and e-mails; Web browsers for presenting Web pages; multimedia players for presenting images and playing audio and/or video files/streams; entertainment software for playing mobile video games; file browsers for working with file systems; other applications providing a user interface; etc. The applications may be capable of decoding data in various video formats (e.g. AVI, ASF, WMV, MPG), audio formats (e.g. MP3, WAV, AAC), image formats (e.g. JPG, GIF, PNG, BMP), and document formats (e.g. DOC, XLS, PPT, PDF, HTML), etc.

The software applications often have the ability to send and receive data items via either network 104 or a link to a computer system. The link to the computer system may be via serial port 152 or short-range communications subsystem 162. Additional applications may also be loaded onto projection device 102 through network 104, auxiliary I/O subsystems 150, serial port 152, short-range communications subsystem 162, or possibly, other device subsystems 164, and installed by a user in RAM 146 or a non-volatile store such as ROM 148 for execution by microprocessor 140. Such flexibility in application installation increases the functionality of projection device 102 and may provide enhanced on-device functions, communication-related functions, or both.

A data signal representing media information may be received or transmitted by communication subsystem 112, Wi-Fi transceiver 168 or short range communications subsystem 162. The microprocessor 140 will further process a received data signal for output by projection unit 180.

Projection device 102 receives audio signals through auxiliary I/O subsystem 150 or microphone 158 and signals for transcription would be generated by a transducer such as microphone 158.

Serial port 152 is often implemented. Serial port 152 enables a user to set preferences through an external device or software application and extends the capabilities of projection device 102 by providing for information, media files, or software downloads to or uploads from projection device 102 other than through network 104.

Short-range communications subsystem 162 is an additional optional component which provides for communication between projection device 102 and different systems or devices, which need not necessarily be similar devices. For example, short-range communications subsystem 162 may include an infrared device and associated circuits and components, or a wireless bus protocol compliant communication mechanism such as a Bluetooth^{™} communication module to provide for communication with similarly-enabled systems and devices (Bluetooth^{™} is a registered trademark of Bluetooth SIG, Inc.). In another embodiment, short-range communications subsystem 162 may be a wireless networking communications subsystem, conforming to IEEE 802.11 standards such as 802.11b, 802.11g, and/or 802.11 n.

Range sensor module 166 is an additional component that measures the distance between the range sensor and the projection surface. In some embodiments, range sensor module 166 is comprised of multiple sensors. Range sensor module 166 may use infrared or ultrasonic technologies, either alone or in combination, and may continually communicate distance information in real time to microprocessor 140. In particular embodiments, range sensor module 166 is a hardware component and may include a software component. Range sensor module 166 may further include the capability to measure or calculate the change in distance and the rate of change in the distance.

In some embodiments, range sensor module 166 resides in projection device 102. In other embodiments, range sensor module 166 may reside at a device (not shown) apart from but accessible to projection device 102. Range sensor module 166 may be communicatively coupled, via wired or wireless techniques, to projection device 102.

Range sensor module 166 may be capable of detecting and recognizing gestures. Gestures may include user movement such as one or more of tapping, touching and holding for a specified time, sliding, waving, flicking or dragging an object, wherein the object is one or more of a bodily appendage, writing utensil, stylus, etc. The gestures may allow a user to interact with projection device 102. In some embodiments, gestures may comprise those often used in multitouch interfaces, such as tap, double tap, drag (e.g. to slide, scroll, or pan), press (i.e. touch and hold), fling/flick, pinch (i.e. pinch close), or spread (i.e. pinch open).

Projection device 102 is configured to change the behaviour of a presentation in response to information received from range sensor module 166. In some embodiments, a change in the projection distance may invoke either a projection unit interface, or a content application interface, or both. For example, software applications residing on projection device 102 may be configured to receive the range sensor information and adjust their behaviour and/or graphical user interfaces accordingly.

Camera module 170 is an additional optional component that is comprised of one or more cameras for detecting and recognizing gestures. In particular embodiments, camera module 170 is a hardware component and may include a software component. In some embodiments, camera module 170 resides in projection device 102, and in other embodiments, it may reside at a device (not shown) apart from but accessible to projection device 102. Camera module 170 may be communicatively coupled, via wired or wireless techniques, to projection device 102.

Reference is next made to FIG. 2A, which illustrates an embodiment of a projection system 200. Projection system 200 generally includes two devices 102, represented as projection device 220 and content source device 222, and WLAN 204, which connects the two devices. Projection device 220 is configured to receive and project content transmitted from content source device 222. Content source device 222 has its own microprocessor 140 and may have its user interface projected. Gesture based interaction with the interface may be provided on other input.

A data signal representing content may be transmitted from content source device 222 to projection device 220. Conversely, a data signal representing range sensor data may be transmitted from projector device 220 to content source device 222. Content source device 222 will further process the range sensor data and change the content transmitted to projector device 220 accordingly.

WLAN 204 comprises a network which in some examples conforms to IEEE 802.11 standards such as 802.11 b, 802.11 g, and/or 802.11 n; however, other communications protocols may also be used for WLAN 204. WLAN 204 includes one or more wireless RF Access Points (AP) 214 that collectively provide a WLAN coverage area. For the embodiment depicted in FIG. 2, the access points 214 are connected to an access point interface not shown.

Although a wireless arrangement is shown, a person skilled in the art would appreciate that other configurations are contemplated. For example, audio/video content may be transmitted by auxiliary I/O subsystems 150 using wired interfaces 232 such as HDMI, VGA, DVI, S-Video, component video, DisplayPort or the like, as illustrated in FIG. 2B.

Similarly, although a particular arrangement with range sensor module 166 residing in device 220 is shown, the present invention contemplates any suitable arrangement. In some embodiments, range sensor module 166 may reside in content source device 222 or at a third wired or wireless device (not shown) apart from but accessible to device 220 and/or content source device 222. It will be appreciated that the systems shown in FIGS. 2A and 2B comprise but two possible configurations for a projection system.

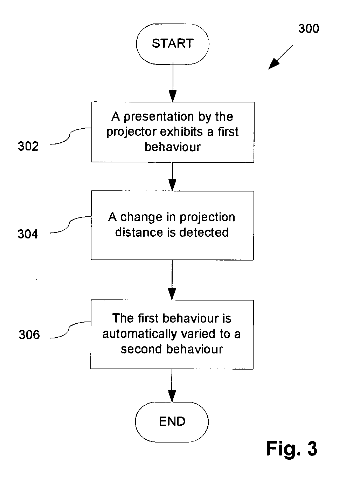

FIG. 3 is a flowchart illustrating an embodiment of a process by which a behaviour of a presentation by projection device 102 is varied. Projection device 102 is capable of exhibiting a plurality of selectable presentation behaviours. As described in further detail below, the behaviours may comprise a control mode, a presentation mode, a mode where a light source in projector unit 180 is dim or off, etc.

At step 302, projection device 102 exhibits a first behaviour when at a first projection distance. At step 304, a change in the projection distance from the first distance to a second distance is detected. At step 306, the behaviour of projection device 102 automatically varies from the first behaviour to a second behaviour responsive to the change in the projection distance.

The projection distance may change in response to any number of events. For example, projection device 102 may be moved away from or towards a particular projection surface, or the device may be substantially stationary and the position of the projection surface (e.g. a hand) may vary. In other situations, projection device 102 may project onto a different surface, resulting in a change in projection distance. By way of example, the projection distance may change as projection device 102 is directed away from one surface and towards another surface (e.g. from a near wall or a near table top, to a further away wall), or if a projection surface is introduced between projection device 102 and the projection surface (e.g. a hand is placed between the range sensor module 166 and a wall, and the hand becomes the projection surface), or if the projection surface is removed (e.g. a hand is moved away, and a wall that was previously behind the hand becomes the projection surface), etc.

In determining the behaviour exhibited at a particular projection distance, the particular projection distance may be compared to a predetermined threshold value. For example, if the projection distance is greater than a preset threshold value, a first behaviour may be exhibited. On the other hand, at projection distances less than a preset threshold value, a second behaviour may be exhibited.

In some embodiments, the projection behaviour may vary if the relative change in projection distance is greater than a threshold value or a threshold percentage of the first projection distance. For example, a change in distance that is greater than a particular number of metres, or a change in distance that is greater than a particular percentage, for example 90 percent (e.g. from 10 metres to less than 1 metre), may result in a change in behaviour exhibited.

Threshold values and percentages may be pre-set by a supplier or manufacturer of projection device 102, by application providers, or by a user, etc. Some embodiments may have a plurality of threshold values and percentages, and the ranges defined thereby may correspond to or be associated with one of a plurality of projector behaviours.

A change in distance may be received as a control input to invoke a change in the behaviour of a presentation by a projector. In taking the change in distance as control input, there need not be any transformation of the nature or quality of the information presented. For example, a change in distance may be interpreted as keyboard input, such as pressing Ctrl-P on a keyboard, or a combination of other keyboard shortcuts, to pause a video. As a further example, a change in distance may cause projection device 102 to turn off or dim a light source in projector unit 180.

In some embodiments, threshold distances may be preset to maximum and minimum distances at which projection device 102 is capable of projecting an image. At distances outside of the supported projection range, projection device may automatically turn off any light source in projector unit 180.

Projection behaviour may comprise of a presentation mode or a control mode (i.e. a state for receiving control input). In control mode, projection device 102 may present controls or be ready to receive gesture and/or voice input.

It will be understood by those of ordinary skill in the art that the controls may comprise interface elements such as one or more of windows, icons, thumbnails, tables, grids, lists, labels, text boxes, menus, push buttons, radio buttons, scrollbars, toolbars, dialog boxes, alert boxes, sliders, status bars, progress bars, or tree views, and that the interface elements may be presented as a graphical overlay. For example, in some embodiments, video player enter into control mode by pausing the video and selecting a video control interface, video file listing interface, video information interface, etc. for presentation by the projector. In other embodiments, a control interface may be presented (e.g. layered) over the video as it plays.

In presentation mode, projection device 102 may not receive gesture or voice input. On the other hand, changing to control mode may cause the device to become ready to receive gesture and/or voice input by turning on camera module 170, microphone 158, etc. In some embodiments, projection device 102 may turn any nearby flat surface into a touch screen by using cameras and/or infrared sensors to detect motion. Users may interact with the projected image in a manner substantially similar to how they would interact with a touch screen on a tablet. For example, a user may tap a projected text field to show or hide a projected keyboard interface, and enter text using the projected keyboard interface.

In transitioning the projector into a state for receiving control input, there need not be any transformation of the nature or quality (e.g. format, degree of detail, etc) of the information presented. For example, the projector may be transitioned into a touch screen mode without changing the content presented.

Range sensor module 166 and/or camera module 170 may detect and recognize user gestures, allowing the user to interact with controls when projected on a closer surface. It will be understood by those of ordinary skill in the art that users may interact with the projected interface through other input means. Examples of alternative means of input on projection device 102 include keyboard or keypad 154, a microphone 158, a touch screen display, a mouse, a clickable thumbwheel, trackball, optical or other touch or gesture based input pad, or set of scroll buttons, etc.

A change in distance may function to change a representation of the information for projection, such as the format, degree of detail, etc. Information can be presented in one or more formats including, but not limited to, charts, graphs, maps, diagrams, figures, tables, grids, lists, icons, thumbnails, text, video and audio. For example, in one embodiment, at a first projection distance, data may be presented as a bar chart, whereas at a second projection distance, a pie chart may be used to represent the same data. In another embodiment, information may be presented as text labels at a first projection distance, whereas at a second projection distance, the labels may be removed and the information may instead be presented as icons. In another embodiment, information may be presented as audio and video at a first projection distance, whereas at a second projection distance, the information may be presented as text captions and video, without any audio. In some embodiments, information may be presented in more detail at a first projection distance, and less detail at a second projection distance. For example, in one embodiment comprising a map application, objects such as landmarks, schools and churches, etc may be represented as icons at greater projection distances. At closer projection distances, the amount of textual information may increase, and names may appear next to the icons, streets, etc. Persons skilled in the art will understand that the data is formatted to a form suitable for the projection distance.

A change in distance may function to change the borders of the projection view and maintain the current scale. For example, a city view of a map may change to a region view of a map may be presented as the projection distance increases. Similarly, a 4x4 icon view may change to a 10x10 icon view while the size of the icons on the projection surface remains constant.

Furthermore, a change in distance may function to change the type or category of content presented, or to invoke an application. For example, while projection device 102 presents a video on a distant wall, a user may be alerted to an incoming e-mail message, and in response place their palm in front of the projector's presentation path. The change in distance may cause the projector to temporarily pause the video and overlay, or switch the presentation image to, an application interface presenting details of the e-mail message.

In some embodiments, a change in behaviour may be invoked only if the change in distance is instantaneous. An instantaneous change is one where there are no projection surfaces (e.g. there are no projection distances detectable by range sensor module 166) between the first and second projection distances that are used to calculate the change in projection distance. This may occur where, for example, an object is placed in the projection path, or the projection surface is removed from the projection path.

A person skilled in the art will understand that projection device 102 capable of toggling, or cycling through, different behaviours in response to changes in projection distance. For example, a user may change the projection distance back and forth between first, second, etc. projection distances to switch back and forth between first, second, etc. behaviours.

In some embodiments, the behaviour of the projection device 102 may change only if the rate of change in projection distance exceeds a particular threshold value. Persons skilled in the art will understand that a change in projection behaviour may be responsive to whether projection distance, change in distance, rate of change in distance, or a combination thereof, exceed their respective and corresponding predetermined or dynamically determined thresholds.

One or more embodiments have been described by way of example. It will be apparent to persons skilled in the art that a number of variations and modifications can be made within the scope of the claims.

## Claims

1. A method (300) of varying a behaviour of a presentation by a projection device (102), the method comprising:
automatically varying the behaviour from a first behaviour to a second behaviour (306) responsive to a change in projection distance from a first distance to a second distance (304), the behaviours comprising a control mode or a presentation mode and the varying comprising invoking the control mode or presentation mode in response to the change in projection distance.

2. The method of any preceding claim wherein one of the first and second distances is less than a threshold value, and the other of the first and second distances is greater than a threshold value.

3. The method of any preceding claim wherein the change in projection distance is greater than a threshold value or a threshold percentage of the first projection distance.

4. The method of any preceding claim wherein the change in projection distance is received as control input.

5. The method of any preceding claim wherein the varying comprises changing a representation of information for projection by the projection device (102).

6. The method of any preceding claim wherein the varying comprises changing the borders of the projection view of the projection device (102) while maintaining scale.

7. The method of any preceding claim wherein the control mode behaviour comprises presenting a control interface.

8. The method of any preceding claim wherein the control mode behaviour comprises receiving gesture or voice input.

9. The method of any preceding claim wherein the varying comprises changing the type or category of the content for projection by the projection device.

10. The method of any preceding claim wherein the change in distance is instantaneous.

11. A computer readable memory having recorded thereon instructions for configuring a processor, when executed, to vary a behaviour of a presentation by a projection device (102), the instructions configuring the processor to carry out a method in accordance with any one of claims 1 to 10.

12. A system comprising:
a projection device (102) comprising a range sensor; and
a computing device comprising a processor and memory configured to vary a behaviour of a presentation by the projection device (102), wherein computing device is coupled to the projection device (102) and the processor and memory are configured to perform a method of any one of claims 1 to 10.

## Patentansprüche

1. Verfahren (300) zum Variieren eines Verhaltens einer Präsentation durch eine Projektionsvorrichtung (102), wobei das Verfahren aufweist:
automatisches Variieren des Verhaltens von einem ersten Verhalten zu einem zweiten Verhalten (306) in Reaktion auf eine Änderung eines Projektionsabstands von einem ersten Abstand zu einem zweiten Abstand (304), wobei die Verhalten einen Steuermodus oder einen Präsentationsmodus aufweisen und das Variieren ein Aufrufen des Steuermodus oder des Präsentationsmodus in Reaktion auf die Änderung des Projektionsabstands aufweist.

2. Das Verfahren gemäß einem vorhergehenden Anspruch, wobei einer der ersten und zweiten Abstände geringer ist als ein Schwellenwert und der andere der ersten und zweiten Abstände größer ist als ein Schwellenwert.

3. Das Verfahren gemäß einem vorhergehenden Anspruch, wobei die Änderung des Projektionsabstands größer ist als ein Schwellenwert oder ein Schwellenprozentsatz des ersten Projektionsabstands.

4. Das Verfahren gemäß einem vorhergehenden Anspruch, wobei die Änderung des Projektionsabstands als Steuereingabe empfangen wird.

5. Das Verfahren gemäß einem vorhergehenden Anspruch, wobei das Variieren ein Ändern einer Darstellung von Information zur Projektion durch die Projektionsvorrichtung (102) aufweist.

6. Das Verfahren gemäß einem vorhergehenden Anspruch, wobei das Variieren ein Ändern der Grenzen der Projektionsansicht der Projektionsvorrichtung (102) aufweist, während ein Maßstab beibehalten wird.

7. Das Verfahren gemäß einem vorhergehenden Anspruch, wobei das Verhalten des Steuermodus ein Präsentieren einer Steuerschnittstelle aufweist.

8. Das Verfahren gemäß einem vorhergehenden Anspruch, wobei das Verhalten des Steuermodus ein Empfangen einer Geste oder einer Spracheingabe aufweist.

9. Das Verfahren gemäß einem vorhergehenden Anspruch, wobei das Variieren aufweist ein Ändern des Typs oder der Kategorie des Inhalts zur Projektion durch die Projektionsvorrichtung.

10. Das Verfahren gemäß einem vorhergehenden Anspruch, wobei die Änderung des Abstands unmittelbar erfolgt.

11. Computerlesbarer Speicher, der darauf Anweisungen gespeichert hat zum Konfigurieren eines Prozessors, wenn ausgeführt, zum Variieren eines Verhaltens einer Präsentation durch eine Projektionsvorrichtung (102), wobei die Anweisungen den Prozessor konfigurieren zum Ausführen eines Verfahrens gemäß einem der Ansprüche 1 bis 10.

12. Ein System, das aufweist:
eine Projektionsvorrichtung (102), die einen Entfernungssensor aufweist; und
eine Computervorrichtung, die einen Prozessor und Speicher aufweist, konfiguriert zum Variieren eines Verhaltens einer Präsentation durch die Projektionsvorrichtung (102), wobei die Computervorrichtung mit der Projektionsvorrichtung (102) gekoppelt ist und der Prozessor und der Speicher konfiguriert sind zum Durchführen eines Verfahrens gemäß einem der Ansprüche 1 bis 10.

## Revendications

1. Procédé (300) destiné à faire varier le comportement d'une présentation d'un dispositif de projection (102), le procédé consistant à :
faire varier automatiquement le comportement d'un premier comportement à un second comportement (306) en réponse à une modification de la distance de projection d'une première distance à une seconde distance (304), les comportements comprenant un mode de commande ou un mode de présentation et la variation consistant à invoquer le mode de commande ou le mode de présentation en réponse à la modification de la distance de projection.

2. Procédé selon l'une quelconque des revendications précédentes, dans lequel l'une des première et seconde distances est inférieure à une valeur seuil, et l'autre des première et seconde distances est supérieure à une valeur seuil.

3. Procédé selon l'une quelconque des revendications précédentes, dans lequel la modification de la distance de projection est supérieure à une valeur seuil ou à un pourcentage seuil de la première distance de projection.

4. Procédé selon l'une quelconque des revendications précédentes, dans lequel la modification de la distance de projection est reçue en tant qu'entrée de commande.

5. Procédé selon l'une quelconque des revendications précédentes, dans lequel la variation consiste à modifier une représentation d'informations destinées à être projetées par le dispositif de projection (102).

6. Procédé selon l'une quelconque des revendications précédentes, dans lequel la variation consiste à modifier les limites de la vue de projection du dispositif de projection (102) tout en conservant l'échelle.

7. Procédé selon l'une quelconque des revendications précédentes, dans lequel le comportement du mode de commande consiste à présenter une interface de commande.

8. Procédé selon l'une quelconque des revendications précédentes, dans lequel le comportement du mode de commande consiste à recevoir une entrée gestuelle ou vocale.

9. Procédé selon l'une quelconque des revendications précédentes, dans lequel la variation consiste à modifier le type ou la catégorie du contenu destiné à être projeté par le dispositif de projection.

10. Procédé selon l'une quelconque des revendications précédentes, dans lequel la modification de la distance est instantanée.

11. Mémoire lisible par ordinateur sur laquelle sont enregistrées des instructions destinées à configurer un processeur, lorsqu'elles sont exécutées, afin de faire varier un comportement d'une présentation effectuée par un dispositif de projection (102), les instructions configurant le processeur afin de mettre en ouvre un procédé selon l'une quelconque des revendications 1 à 10.

12. Système comprenant :
un dispositif de projection (102) comprenant un capteur de distance ; et
un dispositif informatique comprenant un processeur et une mémoire configurés pour faire varier un comportement d'une présentation effectuée par le dispositif de projection (102), le dispositif informatique étant relié au dispositif de projection (102) et le processeur et la mémoire étant configurés pour mettre en oeuvre un procédé selon l'une quelconque des revendications 1 à 10.
